# EUROPEAN PATENT SPECIFICATION

(11) **EP 1 080 520 B1**
(45) Date of publication and mention of the grant of the patent: **19.03.2003**
(21) Application number: 99915910.6
(22) Date of filing: 09.04.1999
(51) Int. Cl.: H01S 3/06, G02B 6/16, G02F 1/35

(54) **OPTICAL FIBRE LASER**
OPTISCHER FASERLASER
LASER A FIBRE OPTIQUE

(30) Priority: 17.04.1998 GB 9808265
(43) Date of publication of application: 07.03.2001
(73) Proprietor: UNIVERSITY OF SOUTHAMPTON, Southampton, Hampshire SO17 1BJ (GB)
(72) Inventor: LAMING, Richard, Ian, Edinburgh EH16 5PU (GB); ZERVAS, Michael, Nickolaos, Southampton, Hampshire SO14 0TP (GB); SET, Sze, Yun, Meguro-ku Tokyo 152-0013 (JP); IBSEN, Morten, Hampshire SO18 4ST (GB); RONNEKLEIV, Erland, N-7017 Trondheim (NO); YAMASHITA, Shinji, Itabashi, Tokyo 173-0027 (JP)
(74) Representative: Haines, Miles John
(86) International application number: PCT/GB99/01105
(87) International publication number: WO 99/054971

(56) References cited:
- EP-A- 0 652 653
- GB-A- 2 299 203
- GB-A- 2 316 760
- US-A- 5 386 314
- US-A- 5 550 654
- STOROY H ET AL: "SINGLE POLARISATION FIBRE DFB LASER" ELECTRONICS LETTERS, vol. 33, no. 1, 2 January 1997, pages 56-58, XP000692486
- SET S Y ET AL: "OPTIMIZATION OF DSF- AND SOA-BASED PHASE CONJUGATORS BY INCORPORATING NOISE-SUPPRESSING FIBER GRATINGS" IEEE JOURNAL OF QUANTUM ELECTRONICS, vol. 33, no. 10, 1 October 1997, pages 1694-1698, XP000722263
- SET S Y ET AL.: "HIGH BITRATE OPERATION OF A NOVEL OPTICAL PHASE CONJUGATOR USING INLINE FIBRE DFB LASERS" PROCEEDINGS OF ECOC'98 - 24TH EUROPEAN CONFERENCE ON OPTICAL COMMUNICATION, MADRID, SPAIN, 20-24 SEPT. 1998, vol. 1, pages 183-184, XP002108824
- SHINJI ET AL.: "POLARIZATION INDEPENDENT, ALL-FIBER PHASE CONJUGATION INCORPORATING INLINE FIBER DFB LASERS" IEEE PHOTONICS TECHNOLOGY LETTERS, vol. 10, no. 10, October 1998, pages 1407-1409, XP000786666

## Description

This invention relates to optical fibre lasers.

Optical fibre grating lasers are attractive alternatives to the already well established semiconductor technology because they are cheaper to manufacture, exhibit narrow line width for ultra high resolution sensing and excellent wavelength stability provided by the grating. Furthermore they are fibre compatible, making all-fibre systems for telecommunication possible.

Of the fibre lasers demonstrated to date the simplest is the all-fibre grating DFB (distributed feedback) or DBR (distributed Bragg reflector) laser. Demonstrations of DFB fibre lasers of different cavity configurations and pump schemes have been reported on several occasions [1-3]. The first of these demonstrations showed lasing in two orthogonal polarisation modes. Later publications of DFB lasers claimed to provide a single polarisation output, but none has appeared to demonstrate a good qualitative understanding of the requirements for truly single mode output (single frequency and single polarisation).

Of the previously reported writing techniques one publication claims to introduce what is believed to be a birefringent ð-phase-shift in the centre of the structure [4] caused by post-processing with high intensity pulses provided by excimer laser UV-sources (193 nm and 248 nm). The birefringent phase shift will then apply more to one polarisation than the other, hence causing that polarisation mode to reach the threshold for lasing before the other mode.

Twisting of the DFB fibre lasers and thereby an introduction of a circular birefringence has also been shown to cause the fibre laser to operate in a single polarisation [5]. This state of operation is then a function of the fibre twist and therefore the amount of circular birefringence introduced in the cavity. Furthermore Hi-Bi fibres have been shown to cause a significant [6] discrimination between the two polarisation modes with the result of allowing only one of the modes to lase.

However, there is still a need for a technique for generating robustly single polarisation DFB lasers.

This invention provides in a first aspect a method of fabricating an optical fibre laser, the method comprising the step of exposing an optical fibre to a transverse writing light beam to form a grating structure in a section of the optical fibre, the writing light beam being polarised in a direction not parallel to the axis of the section of the optical fibre so that the induced grating structure has a different grating strength for two orthogonal polarisation modes of the optical fibre, the grating structure comprising a discrete phase shift which is substantially identical for the two orthogonal polarisation modes.

In a second aspect of the invention there is provided an optical fibre laser comprising an optical fibre having a grating structure in a section of the optical fibre, wherein the grating structure has a different grating strength for two orthogonal polarisation modes of the optical fibre, the grating structure comprising a discrete phase shift which is substantially identical for the two orthogonal polarisation modes.

In embodiments of the invention, by writing substantially an entire fibre laser with UV-light polarised *perpendicular* (or at least non-parallel) to the fibre axis, a difference in grating strength between the two orthogonal modes of the fibre is introduced. This provides strong polarisation mode discrimination and so a robust single polarisation fibre laser operation can be achieved. We show lasers of length 5 cm and of approximate grating strengths (*êL*) of ∼8. The lasers have a discrete ð-phase shift in the structure off-centre by 5 mm giving a ratio of grating strength ratio of 2:3 on either side of the phase shift.

Optical phase conjugation has been attracting considerable attention, because of its application in the compensation of chromatic dispersion and nonlinearities in optical fibre communication systems using midspan spectral inversion (MSSI) technique[10], [11], and also because of its application in wavelength conversion which is essential in wavelength-division multiplexed (WDM) optical networks.

It has been conventionally accomplished by four-wave mixing *(FWM)* in a dispersion-shifted fibre (DSF) or a semiconductor optical amplifier (SOA), in which the optical signal is mixed with an externally injected pump light through a fibre coupler, and fed into a DSF or an SOA to generate a wavelength converted conjugate light. The signal and pump polarisation states must be aligned to get maximum conversion efficiency, which is generally not practical since any signal light polarisation fluctuation will affect the power of the conjugated light.

Two solutions have been proposed to achieve polarisation independence in the device. These are: (i) a polarisation-diversity arrangement [12], [13]; and (ii) injection of two orthogonally polarised pump lights[14], [15]. However, they add more complexity in the phase conjugator / wavelength converter.

FWM in a distributed-feedback (DFB) semiconductor laser [16] is attractive because it does not require external injection of the pump light, but its polarisation independent implementation requires a phase-diversity arrangement [17].

The invention also provides in a third aspect an optical phase conjugator comprising:
one or more in-line optical fibre lasers according to the second aspect of the invention for generating two substantially orthogonally polarised pump light beams; and
a non-linear mixing waveguide for receiving and mixing the pump beams with an input signal beam.

In the third aspect of the invention, a novel phase conjugation and/or wavelength conversion technique by FWM is provided using orthogonally polarised pump lights- from inline fibre lasers. Embodiments of this technique feature polarisation independent operation and simple configuration without the need for external injection of pump light.

In a further aspect of the invention there is provided a laser source comprising:
a single polarisation, dual wavelength laser according to the second aspect of the invention having two output wavelengths;
means for detecting and monitoring a beat frequency between the two output wavelengths of the laser; and
a feedback circuit operable to control the two output wavelengths of the laser to keep the detected beat frequency substantially constant.

Embodiments of the invention will now be described, by way of example only, with reference to the accompanying drawings in which:
Fig. 1 illustrates the output spectrum of a single polarisation and single frequency DFB laser with 20 mW pumped power at 980 nm;
Fig. 2 illustrates the so-called Poincare sphere output representation of the laser of Fig. I;
Fig. 3a schematically illustrates the fabrication process;
Fig. 3b illustrates the use of such a laser as a frequency standard source;
Fig. 4a is a schematic diagram illustrating a phase conjugator / wavelength converter using a dual-polarisation fibre DFB laser;
Fig. 4b is a schematic diagram illustrating a phase conjugator / wavelength converter using two single-polarisation fibre DFB lasers;
Figs. 5a and 5b illustrate the output optical spectra of the phase conjugator / wavelength converter of Fig. 4a (using a dual-polarisation fibre DFB laser), where:
   the fibre DFB laser operates at dual polarisations (Fig. 5a); and
   the fibre DFB laser operates at a single polarisation (Fig. 5b);
Figs. 6a and 6b illustrate the output optical spectra of the phase conjugator / wavelength converter of Fig. 4b (using two single-polarisation fibre DFB lasers), where:
   the polarisation states of the two pump lights are orthogonal (Fig. 6a);
   the polarisation states of the two pump lights are aligned (Fig. 6b); and
Fig. 7 shows a laser arrangement embodying the invention.

### Theoretical background

Threshold and lasing conditions of DFB fibre lasers are functions of the grating strength (êL) where ê is the coupling coefficient and L is the length of the grating, and the gain available in the feedback structure.

For the core of an optical fibre to be photosensitive to UV light a certain amount of defects, or so-called Germano-Silica wrong bonds, must be present. The molecular characteristics of the wrong-bonds makes them susceptible for UV -light at a certain wavelength (e.g. 244 nm) to break the bond between them. The presence of wrong-bonds in the core of an optical fibre causes a stress that ideally should be isotropic. The presence of initial birefringence as is the case in most fibres however suggests a slightly anisotropic nature of the defects possibly generated by the drawing process of the fibres. The wrong-bond breakage introduced be the UV exposure causes a stress relief causing the refractive index to rise in the regions of the relief. A selective Ge-Si wrong-bond breakage therefore mainly will cause wrong-bonds polarised parallel to the polarisation of the light to be broken, and as result an anisotropic grating will be created in the core-region of the fibre.

### Experimental set-up

The experimental set-up used to fabricate a prototype embodiment will now be described.

The DFB fibre lasers are written in a Deuterium loaded Er³⁺:Yb³⁺ -doped fibre, to achieve increased pump absorption, with characteristics described elsewhere [8]. An intra-cavity frequency doubled Ar-ion laser operating CW at 244 nm with 100 mW output is used as the UV source. The grating forming the DFB laser was written using techniques and apparatus described in GB 96017688.8 (GB 2 316 760 A), but other known techniques could instead be used. The initial horizontal linearly polarisation state of the laser was flipped to a vertical linearly polarised state using a ë/2-wave plate. The DFB grating was written with a ð-phase shift (identical for both polarisations) off-centre [9] by 10% in order to maximise the output to one side of the laser. Up to 50 mW of light from a 980 nm diode was used as pump light. The laser was forward pumped and the polarisation state of the prototype laser was analysed using a HP 8905B polarisation analyser. The phase shift could of course have been different, for example many multiples of π.

### Results for Prototype Laser

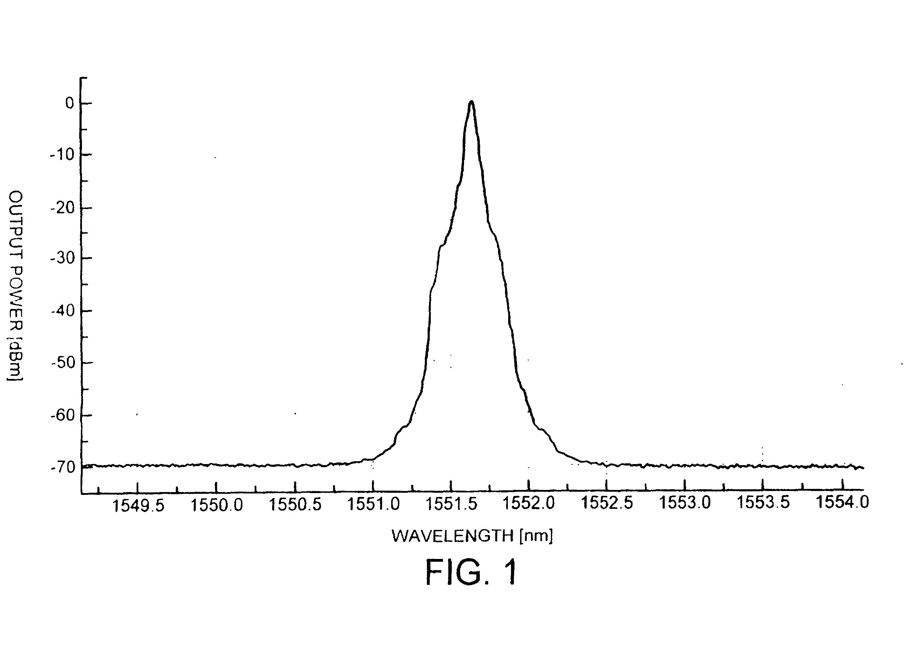

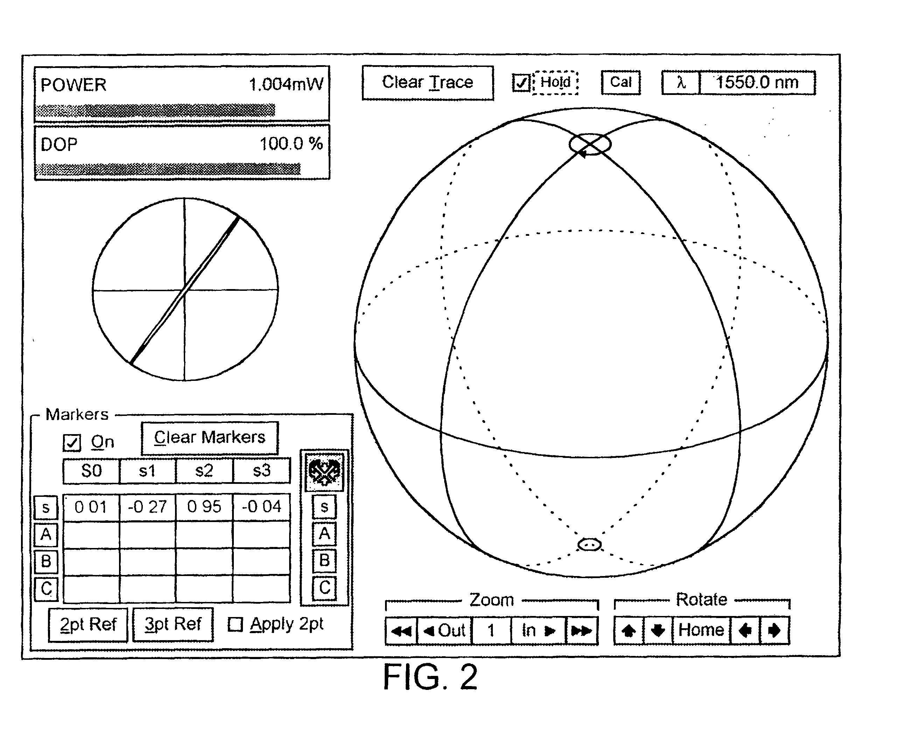

Fig. 1 shows the output spectrum of a 5 cm long single frequency, single polarisation prototype DFB fibre laser pumped with 20 mW at 980 nm. The linewidth of the laser was measured to be as low as 3 kHz. An output power ratio of 30 dB between the output ends was observed. Being properly temperature stabilised the laser showed stable output power (3.1 dBm ± 0.05 dBm) for ∼ 50 mW pump at 980 nm and stable single polarisation operation over a period of hours. Fig. 2 shows the Poincare sphere output of the laser and shows that the degree of polarisation is 1, indicating single polarisation operation. The laser was also pumped with 1480 nm and showed despite the lower output power also single polarisation output.

The laser written with the UV light polarised orthogonal to the fibre axis were tested against a laser written with a birefringent phase-shift (only orthogonal polarised UV writing beam in the phase-shift region) as has been the only recently demonstrated writing procedure. See for example reference [20], where a two-step process is required to achieve a working single polarisation laser, and the process is subject to degradation as the tuned phase shift decays in time. We found that the all birefringent laser showed more stable single polarisation operation than the birefringent phase-shift laser. In particular for higher pump powers showed the birefringent phase-shift DFB occasional dual polarisation mode operation.

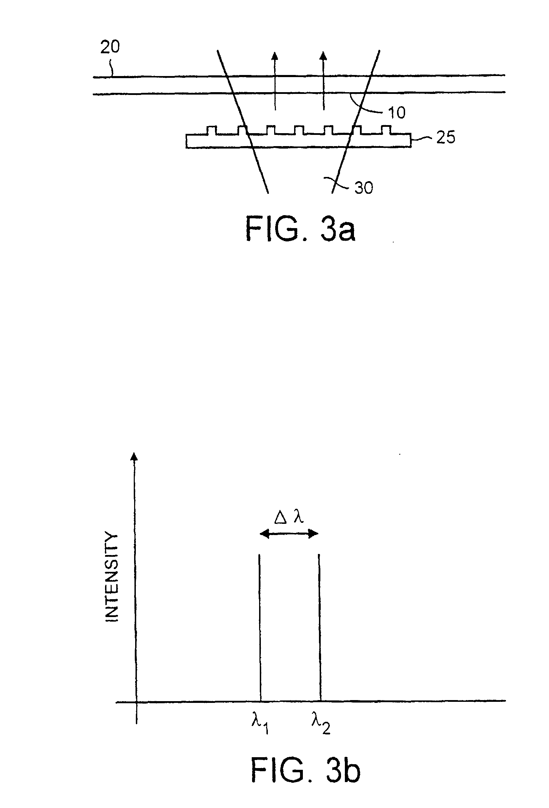

The fabrication process is summarised in Fig. 3a, which illustrates a section 10 of a photosensitive optical fibre 20 being exposed via a phase mask 25 to a writing light beam 30 which (in this example) is polarised substantially orthogonally to the axis of the section 10.

Fig. 3b illustrates an application of such a laser as part of a frequency standard device. If the laser is arranged to operate simultaneously at two wavelengths but one polarisation then these wavelengths λ1 and λ2 will be separated by Δλ. This can be achieved by overlaying two DFB grating structures or by writing simultaneously as a Moire phase shifted structure. This difference can be detected as an RF beat frequency between the two output wavelengths.

It can easily be shown that Δλ is proportional to λ1 (or λ2). So (as illustrated in Fig. 7) by monitoring Δλ using an optical detector 200 and an RF frequency detector and applying the result via a feedback circuit 210 (e.g. comparing Δλ with a reference RF signal RF_{ref}) to a wavelength control of the laser 220 operation (e.g. a temperature control), great stability in the wavelength of the two outputs of the laser can be achieved.

A further application of such a laser will now be described.

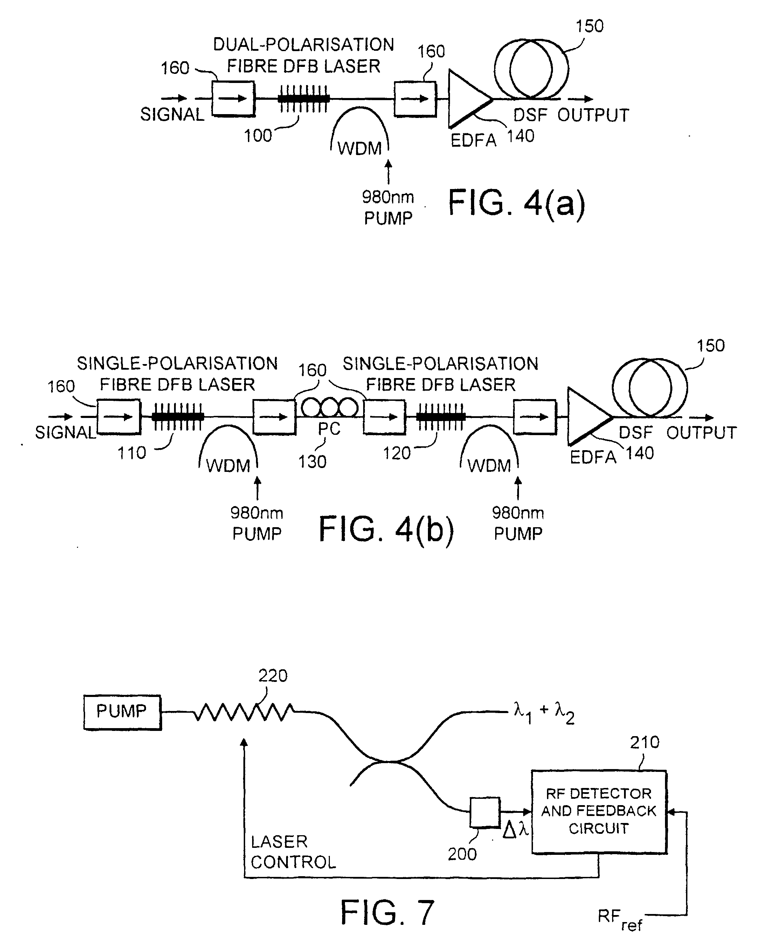

Figs. 4a and 4b show the configuration of a phase conjugator / wavelength converter. The converter uses FWM pump sources 100, 110, 120 which are Er³⁺ :Yb³⁺ fibre DFB lasers [18] pumped with 980nm 100mW laser diodes (LD's). Preferably the lasers are fabricated as described earlier.

To achieve polarisation independence, the FWM pump lights should preferably be orthogonally polarised at equal powers [14], [15], so these embodiments use either (a) a dual-polarisation fibre DFB laser (Fig.4(a)), or (b) two single-polarisation fibre DFB lasers cascaded through a polarisation controller (PC) 130 (Fig.4(b)).

Since the fibre DFB lasers are transparent at the signal wavelength, the signal and the DFB generated FWM pump lights are combined through direct injection of the signal light into one end of the fibre DFB laser. This eliminates the need of a polarisation combiner and a signal/ pump coupler as required in a conventional polarisation independent device. After amplification by an Er3+-doped fibre amplifier (EDFA) 140, the signal and pump lights are launched into a dispersion shifted fibre (DSF) 150, generating a conjugate light which is insensitive to the signal polarisation owing to the two orthogonally polarised pump lights. Optical isolators 160 are also used to prevent unwanted reflections.

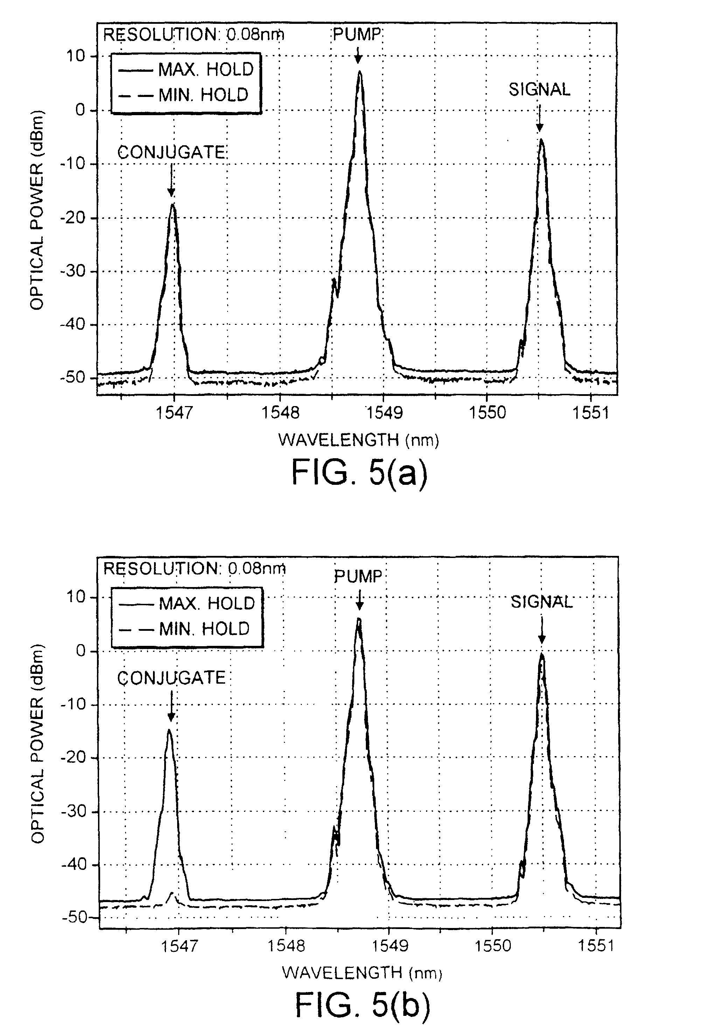

Figs. 5a and 5b show the output optical spectra of the phase conjugator/wavelength converter using a dual-polarisation fibre DFB laser in Fig.4(a). The fibre DFB laser is 5cm in length, operating at 1548.7nm in two orthogonal polarisations separated by about 0.8GHz, due to the birefringence in the fibre DFB resonator, for this "imperfect" (i.e. practical prototype) laser. The optical powers of the two polarisations are slightly different at the "free-running state", but they can be changed by applying a stress at the mid-point of the fibre DFB laser as a result of the anisotropic phase shift induced in the two birefringent axes. By proper adjustment of the strength, the orientation and the position of the stress, we could force it operate either in two polarisations with equal powers, or in a single polarisation. The half-width of the unpumped DFB resonator stop band is measured to be about 0.2nm. The pass band insertion loss of the DFB laser module including two isolators is about 2.7dB. This can be reduced to be as low as 1dB with better components and splices. A tuneable single frequency laser operating at 1550.5nm is used as a signal source, and a llkm-DSF with zero-dispersion wavelength at 1548nm is used as a non-linear FWM media. The output spectrum is measured using an optical spectrum analyser (OSA) (with 0.08nm resolution) with scanning with a maximum hold trace (solid) and a minimum hold trace (dashed). The signal polarisation state is varied arbitrarily over all states using a PC throughout the measurement. Figure 5(a) shows the output spectrum when the fibre DFB laser operates at dual polarisations. As expected, nearly polarisation independent phase conjugation was realised. Remaining polarisation dependency is about 0.5dB. When the fibre DFB laser operates at a single polarisation (Fig.5(b)), the conjugate light suffered large fading over 30dB.

Although the single polarisation lasers in this example did not employ the new fabrication technique described above, in other embodiments such a technique is used and provides associated benefits.

It should be noted that this particular example of dual-polarisation fibre DFB laser can not be used with the signal bit-rate of higher than 400Mbit/s, because the signal bit rate must be less than half of the frequency separation of two pump lights[15]. The frequency separation can be expanded to more than 40GHz using a highly birefringent Er 3+ :Yb3+ fibre[18].

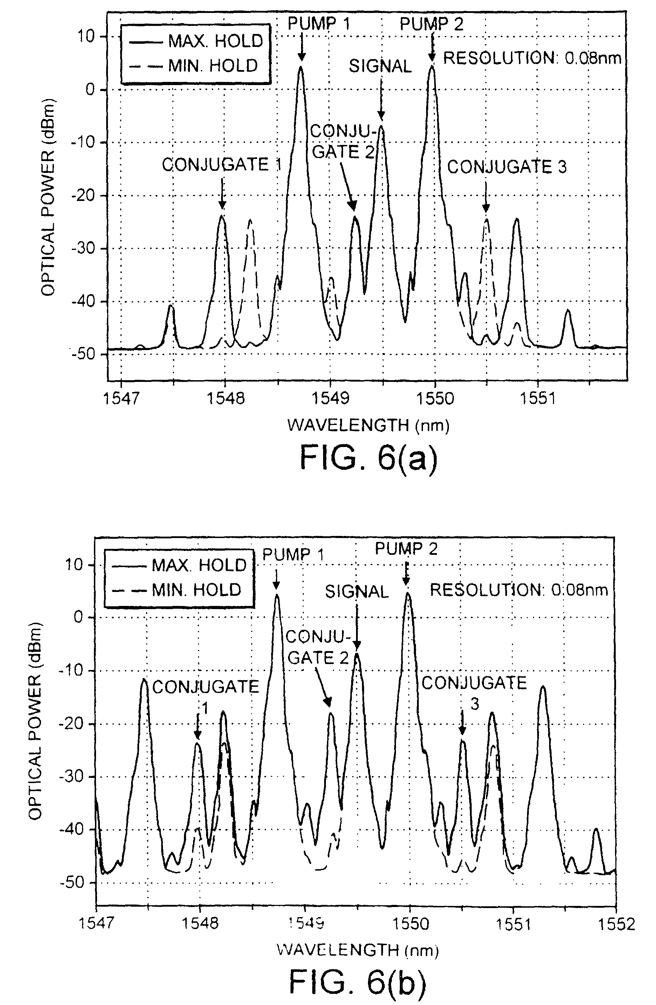

Figs. 6a and 6b show the output optical spectra of the phase conjugator/ wavelength converter using two single-polarisation fibre DFB lasers cascaded through a PC, as shown in Fig.4(b). The fibre DFB lasers are operating at 1548.7nm (pump 1) and 1550nm (pump 2) in a single polarisation using the above stress method. Incident FWM pump powers into the DSF are set to be equal by adjusting respective 980nm pump powers of the fibre DFB lasers. Note that the isolators before and after the PC are not essential. Fig. 6(a) is when the polarisation states of two pump lights are set to be orthogonal by adjusting the PC between the two fibre DFB laser modules. The PC was actually set to minimise the mixing products between pump 1 and pump 2 appearing at 1547.4nm and 1551.3nm. The signal wavelength is set at 1549.5nm between pump 1 and pump 2. In this case, many mixing products are generated owing to the completely non degenerate FWM process, and the phase conjugate components to the signal appear at 1547.9nm conjugate 1, 1549.3nm conjugate 2, and 1550.5nm (conjugates). A solid trace is when conjugate 1 reaches a maximum, and a broken trace is when it reaches minimum. It is observed that conjugate 2 is polarisation independent, and one of conjugate 1 and conjugate 3 reaches maximum when the other reaches minimum. The remaining polarisation dependency of conjugate 2 is about 0.5dB. Figure 6(b) is when the polarisation states of two pump lights are set to be aligned to maximise the mixing products between pump 1 and pump 2. Conjugate 2 is found to have a large polarisation dependency over 20dB, although the maximum conversion efficiency is improved by 5.3dB compared to that in Fig.6(a), which agrees well with the theoretical value of 6dB. The signal wavelength can be set far from pump wavelengths, but the conversion efficiency becomes poor due to the non ideal zero-dispersion wavelength of the DSF.

In summary, a novel technique for optical wavelength conversion and phase conjugation by fibre FWM using inline fibre DFB lasers as orthogonally polarised pump sources has been described. It features substantially polarisation independent operation and simple configuration without the need for a polarisation combiner and a signal/ pump coupler as required in a conventional polarisation independent device. Polarisation independent operation of the phase conjugator/wavelength converter has been described, to achieve a polarisation dependency as low as 0.5dB. It is also possible to integrate the fibre DFB laser module into an EDFA. Furthermore, this technique is applicable to FWM in an SOA or in a chalcogenide fibre as well as in a DSF.

### PUBLICATION REFERENCES

[1] KRINGLEBOTN, J T. et al: Optics Lett., **19**, pp. 2101-2103, 1994.
[2] ASSEH, A. et al: Electron. Lett., **31**, (9), pp. 969-970, 1995.
[3] LOH, W H. et al: Electron. Lett., **31**, (17), pp. 1440-1442, 1995.
[4] HÜBNER, J. et al: Electron. Lett., **33**, (2), pp. 139-140, 1997.
[5] HARUJUNIAN, Z. E. et al: Electron. Lett., **32**, (4), pp. 346-348, 1996.
[6] DOUAY, M. et al: IEEE Photon., Technol., Lett., **4**, pp. 844-846, 1992.
[7] NIAY, P. et al: IEEE Photon., Technol., Lett., **7**, (4), pp. 391-393, 1995.
[8] DONG, L. et al: Optics Lett., **22**, (10), pp. 694-696, 1997.
[9] LAURIDSEN, V C. et al: Proceedings to *ECOC'97*, **3**, pp. 39-42, Session
   WE1C, Edinburgh, UK, 1997.
[10] ELLIS, A et al, Electron. Lett., **31**, (4), pp.299-301, Feb. 1995.
[11] ROYSET, A et al, IEEE Photon. Technol. Lett., **8**, (3) pp.449-451, Mar. 1996.
[12] HASEGAWA, T et al, IEEE Photon. Technol. Lett., **5**, pp.947-949, Aug. 1993.
[13] LACEY, J P R et al, IEEE Photon. Technol. Lett., **9**, (10), pp.1355-1357, Oct. 1997.
[14] JOPSON R M et al, Electron. Lett., **29**, (25), pp.2216-2217., Dec. 1993.
[15] INOUE, K, J. Lightwave Technol., **12**, (11), pp.1916-1920, Nov. 1994.
[16] KUWATSUKA, H et al,. Electron. Lett., **31**, (24), pp.2108-2110, Nov. 1995.
[17] WATANABE, S et al,.Electron. Lett., **33**, (4), pp.316-317, Feb. 1997.
[18] LOH, W H et al, J. Lightwave Technol., **16**, (1), pp.114-118, Jan. 1998.
[19] LOH, W H et al, Electron. Lett., **33**, (7), pp.594-595, Mar. 1997.
[20] STOROY, H, PhD Thesis, Norges Teknisk-naturvitenskapelige Universitet Trondheim, FYS.EL-rapport 1997:22, February 1997

## Claims

1. A method of fabricating an optical fibre laser, the method comprising the step of exposing an optical fibre (20) to a transverse writing light beam (30) to form a grating structure in a section (10) of the optical fibre, the writing light beam being polarised in a direction not parallel to the axis of the section of the optical fibre so that the induced grating structure has a different grating strength for two orthogonal polarisation modes of the optical fibre, the grating structure comprising a discrete phase shift which is substantially identical for the two orthogonal polarisation modes.

2. A method according to claim 1, in which the writing light beam is polarised in a direction substantially perpendicular to the axis of the section of the optical fibre.

3. A method according to claim 1 or claim 2, in which the writing light beam is an ultraviolet beam.

4. A method according to claim 3, in which the ultraviolet beam has a wavelength of about 244 nanometres.

5. A method according to any one of claims 1 to 4, in which the optical fibre section is doped with at least one amplifying dopant.

6. A method according to claim 5, in which the optical fibre section is doped with at least one rare earth element.

7. A method according to claim 6, in which the optical fibre section is doped with erbium and ytterbium.

8. A method according to any one of claims 1 to 7, wherein the optical fibre laser is stressed to provide substantially single polarisation operation.

9. A method according to any one of claims 1 to 7, wherein the optical fibre laser is stressed to provide dual polarisation operation.

10. A method according to any one of claims 1 to 8, wherein the grating structure is written as a Moire phase shifted structure to provide lasing operation at two wavelengths having one polarisation.

11. A method according to any one of claims 1 to 8, wherein the grating structure is written as first and second overlaying DFB grating structures to provide lasing operation at two wavelengths having one polarisation.

12. An optical fibre laser comprising an optical fibre having a grating structure in a section of the optical fibre, wherein the grating structure has a different grating strength for two orthogonal polarisation modes of the optical fibre, the grating structure comprising a discrete phase shift which is substantially identical for the two orthogonal polarisation modes.

13. An optical fibre laser according to claim 12, in which the optical fibre section is doped with at least one amplifying dopant.

14. An optical fibre laser according to claim 13, in which the optical fibre section is doped with at least one rare earth element.

15. An optical fibre laser according to claim 14, in which the optical fibre section is doped with erbium and ytterbium.

16. An optical fibre laser according to any one of claims 12 to 15, wherein the optical fibre laser is configured to provide substantially single polarisation operation.

17. An optical fibre laser according to any one of claims 12 to 15, wherein the optical fibre laser is configured to provide dual polarisation operation.

18. An optical fibre laser according to any one of claims 12 to 15, wherein the optical fibre laser is configured to provide dual wavelength operation having one polarisation.

19. An optical fibre laser according to claim 18, wherein the grating structure is a Moire phase shifted structure having one polarisation.

20. An optical fibre laser according to claim 18, wherein the grating structure comprises first and second overlaying DFB grating structures.

21. An optical phase conjugator comprising:
one or more in-line optical fibre lasers according to any one of claims 12 to 20 for generating two substantially orthogonally polarised pump light beams; and
a non-linear mixing waveguide for receiving and mixing the pump beams with an input signal beam.

22. A phase conjugator according to claim 21, in which the non-linear mixing waveguide is selected from the group consisting of: a dispersion-shifted optical fibre; a chalcogenide optical fibre; and a semiconductor optical amplifier.

23. A phase conjugator according to claim 21 or claim 22, in which the two pump beams have wavelengths displaced to either side of the wavelength of the signal beam.

24. A phase conjugator according to any one of claims 21 to 23, in which the one or more in-line optical fibre lasers comprise:
a first single polarisation optical fibre laser (110) according to claim 16;
a polarisation controller (130) for varying the polarisation of a light beam generated by the first single polarisation optical fibre laser; and
a second single polarisation optical fibre laser (120) according to claim 16 connected in series with the first single polarisation optical fibre laser and the polarisation controller.

25. A phase conjugator according to any one of claims 21 to 23, in which the one or more in-line optical fibre lasers comprise:
a dual polarisation optical fibre laser (100) according to claim 17.

26. A laser source comprising:
a single polarisation, dual wavelength laser according to claim 18 having two output wavelengths;
means (200) for detecting and monitoring a beat frequency between the two output wavelengths of the laser; and
a feedback circuit (210) operable to control the two output wavelengths of the laser to keep the detected beat frequency substantially constant.

## Patentansprüche

1. Verfahren zur Herstellung eines optischen Lichtleiterlasers, wobei das Verfahren den Schritt des Bestrahlens eines optischen Lichtleiters (20) mit einem querschreibenden Lichtstrahl (30), um eine Gitterstruktur in einem Abschnitt des optischen Lichtleiters zu bilden, wobei der schreibende Lichtstrahl in einer Richtung polarisiert ist, die nicht parallel zu der Achse des Abschnittes des optischen Lichtleiters ist, so daß die induzierte Gitterstruktur für zwei orthogonale Polarisationsmoden der optischen Faser unterschiedliche Gitterstärken hat, wobei die Gitterstruktur einen diskreten Phasenshift aufweist, der für die zwei orthogonalen Polarisationsmoden im wesentlichen identisch ist.

2. Verfahren nach Anspruch 1, in dem der schreibende Lichtstrahl in einer Richtung im wesentlichen senkrecht zu der Achse des Abschnittes des optischen Lichtleiters polarisiert ist.

3. Verfahren nach Anspruch 1 oder Anspruch 2, in dem der schreibende Lichtstrahl ein Ultraviolettstrahl ist.

4. Verfahren nach Anspruch 3, in dem der Ultraviolettstrahl eine Wellenlänge von etwa 244 Nanometem hat.

5. Verfahren nach einem der Ansprüche 1 bis 4, in dem der Abschnitt des optischen Lichtleiters mit zumindest einem verstärkenden Dotierstoff dotiert ist.

6. Verfahren nach Anspruch 5, in dem der Abschnitt des optischen Lichtleiters mit zumindest einem Seltenerdelement dotiert ist.

7. Verfahren nach Anspruch 6, in dem der Abschnitt des optischen Lichtleiters mit Erbium und Ytterbium dotiert ist.

8. Verfahren nach einem der Ansprüche 1 bis 7, in dem der optische Lichtleiterlaser unter Spannung gesetzt ist, um im wesentlichen den Einzelpolarisationsbetrieb zur Verfügung zu stellen.

9. Verfahren nach einem der Ansprüche 1 bis 7, in dem der optische Lichtleiterlaser unter Spannung gesetzt ist, um den Dualpolarisationsbetrieb zur Verfügung zu stellen.

10. Verfahren nach einem der Ansprüche 1 bis 8, in dem die Gitterstruktur als eine Moirephasenverschobene Struktur geschrieben ist, um den Laserbetrieb bei zwei Wellenlängen mit einer Polarisation zur Verfügung zu stellen.

11. Verfahren nach einem der Ansprüche 1 bis 8, wobei die Gitterstruktur als eine erste und zweite überlagemde DFB-Gitterstruktur geschrieben ist, um den Laserbetrieb bei zwei Wellenlängen mit einer Polarisation bereitzustellen.

12. Optischer Faserlaser bzw. optischer Lichtleiterlaser, der eine optische Faser bzw. einen optischen Lichtleiter aufweist mit einer Gitterstruktur in einem Abschnitt der optischen Faser, wobei die Gitterstruktur über zwei orthogonale Polarisationsmoden der optischen Faser eine unterschiedliche Gitterstärke hat, wobei die Gitterstruktur eine diskrete Phasenverschiebung aufweist, die für die zwei orthogonalen Polarisationsmoden im wesentlichen identisch ist.

13. Optischer Faserlaser nach Anspruch 12, in dem der Abschnitt der optischen Faser mit zumindest einem verstärkenden Dotierstoff dotiert ist.

14. Optischer Faserlaser nach Anspruch 13, in dem der Abschnitt der optischen Faser mit zumindest einem Seltenerdelement dotiert ist.

15. Optischer Faserlaser nach Anspruch 14, in dem der Abschnitt der optischen Faser mit Erbium und Ytterbium dotiert ist.

16. Optischer Faserlaser nach einem der Ansprüche 12 bis 15, wobei der optische Faserlaser derart konfiguriert ist, daß er im wesentlichen den Einzelpolarisationsbetrieb bereitstellt.

17. Optischer Faserlaser nach einem der Ansprüche 12 bis 15, wobei der optische Faserlaser derart konfiguriert ist, daß er den Dualpolarisationsbetrieb bereitstellt.

18. Optischer Faserlaser nach einem der Ansprüche 12 bis 15, wobei der optische Faserlaser derart konfiguriert ist, daß er den Dualwellenlängenbetrieb mit einer Polarisation zur Verfügung stellt.

19. Optischer Faserlaser nach Anspruch 18, wobei die Gitterstruktur eine Moirephasenverschobene Struktur mit einer Polarisation ist.

20. Optischer Faserlaser nach Anspruch 18, bei dem die Gitterstruktur erste und zweite überlagernde DFB-Gitterstrukturen aufweist.

21. Optischer Phasenkonjugator, der aufweist:
ein oder mehrere in Reihe angeordnete optische Faserlaser entsprechend einem der Ansprüche 12 bis 20 für die Erzeugung von zwei im wesentlichen orthogonal polarisierten Pumplichtstrahlen und
einen Wellenleiter für das nichtlineare Mischen für den Empfang und das Mischen der Pumpstrahlen mit einem Eingangssignalstrahl.

22. Phasenkonjugator nach Anspruch 21, in dem der Wellenleiter für das nichtlineare Mischen ausgewählt wird aus der Gruppe, die besteht aus: einer optischen dispersionsverschobenen Faser, einer optischen Chalcogenidfaser und einem optischen Halbleiterverstärker.

23. Phasenkonjugator nach Anspruch 21 oder Anspruch 22, in dem die zwei Pumpstrahlen Wellenlängen haben, die zu irgendeiner Seite der Wellenlänge des Signalstrahls verschoben sind.

24. Phasenkonjugator nach einem der Ansprüche 21 bis 23, bei dem der eine oder die mehreren in Reihe angeordneten optischen Faserlaser aufweisen:
einen ersten optischen Einzelpolarisationsfaserlaser (110) nach Anspruch 16,
einen Polarisationscontroller (130) für die Variation der Polarisation eines Lichtstrahls, der von dem ersten optischen Faserlaser mit Einzelpolarisation erzeugt wird,
einen zweiten optischen Faserlaser (120) mit einzelner Polarisation nach Anspruch 16, der mit dem ersten optischen Faserlaser mit einzelner Polarisation und dem Polarisationscontroller in Reihe geschaltet ist.

25. Phasenkonjugator entsprechend einem der Ansprüche 21 bis 23, in dem der eine oder die mehreren in Reihe geschalteten optischen Faserlaser aufweisen:
einen optischen Faserlaser (100) mit Dualpolarisation nach Anspruch 17.

26. Laserquelle, die aufweist:
einen Einzelpolarisationslaser mit zwei Wellenlängen entsprechend Anspruch 18 mit zwei Ausgangswellenlängen,
eine Einrichtung (200) für die Erfassung und die Überwachung einer Schwebungsfrequenz zwischen den beiden Ausgangswellenlängen des Lasers, und
einen Rückkopplungsschaltkreis (210), der derart betreibbar ist, daß er die beiden Ausgangswellenlängen des Lasers steuert und die erfaßte Schwebungsfrequenz im wesentlichen konstant hält.

## Revendications

1. Procédé de fabrication d'un laser à fibres optiques, le procédé comprenant l'étape d'exposition d'une fibre optique (20) à un faisceau de laser d'écriture transversal (30) de façon à former une structure de réseau de diffraction dans une section (10) de la fibre optique, le faisceau de lumière d'écriture étant polarisé dans une direction qui n'est pas parallèle à l'axe de la section de la fibre optique, de telle sorte que la structure de réseau de diffraction induite a une force de réseau de diffraction différente pour deux modes de polarisation orthogonaux de la fibre optique, la structure de réseau de diffraction comprenant un déphasage individuel qui est sensiblement identique pour les deux modes de polarisation orthogonaux.

2. Procédé selon la revendication 1, dans lequel le faisceau de lumière d'écriture est polarisé dans une direction sensiblement perpendiculaire à l'axe de la section de la fibre optique.

3. Procédé selon la revendication 1 ou la revendication 2, dans lequel le faisceau de lumière d'écriture est un faisceau d'ultraviolets.

4. Procédé selon la revendication 3, dans lequel le faisceau d'ultraviolets a une longueur d'onde d'environ 244 nanomètres.

5. Procédé selon l'une quelconque des revendications 1 à 4, dans lequel la section de fibre optique est dopée avec au moins un dopant d'amplification.

6. Procédé selon la revendication 5, dans lequel la section de fibre optique est dopée avec au moins un élément des terres rares.

7. Procédé selon la revendication 6, dans lequel la section de fibre optique est dopée avec de l'erbium et de l'ytterbium.

8. Procédé selon l'une quelconque des revendications 1 à 7, dans lequel le laser à fibres optiques est contraint pour produire un fonctionnement à polarisation sensiblement unique.

9. Procédé selon l'une quelconque des revendications 1 à 7, dans lequel le laser à fibres optiques est contraint pour produire un fonctionnement à polarisation double.

10. Procédé selon l'une quelconque des revendications 1 à 8, dans lequel la structure de réseau de diffraction est écrite sous la forme d'une structure à déphasage de Moiré pour produire un fonctionnement de laser à deux longueurs d'onde ayant une polarisation.

11. Procédé selon l'une quelconque des revendications 1 à 8, dans lequel la structure de réseau de diffraction est écrite sous la forme de première et deuxième structures de réseau de diffraction à rétroaction répartie superposées de façon à produire un fonctionnement de laser à deux longueurs d'onde ayant une polarisation.

12. Laser à fibres optiques comprenant une fibre optique comportant une structure de réseau de diffraction dans une section de la fibre optique, dans lequel la structure de réseau de diffraction a une force de réseau de diffraction différente pour deux modes de polarisation orthogonaux de la fibre optique, la structure de réseau de diffraction comprenant un déphasage individuel qui est sensiblement identique pour les deux modes de polarisation orthogonaux.

13. Laser à fibres optiques selon la revendication 12, dans lequel la section de fibre optique est dopée avec au moins un dopant d'amplification.

14. Laser à fibres optiques selon la revendication 13, dans lequel la section de fibre optique est dopée avec au moins un élément des terres rares.

15. Laser à fibres optiques selon la revendication 14, dans lequel la section de fibre optique est dopée avec de l'erbium et de l'ytterbium.

16. Laser à fibres optiques selon l'une quelconque des revendications 12 à 15, dans lequel le laser à fibres optiques est configuré de façon à produire un fonctionnement à polarisation sensiblement unique.

17. Laser à fibres optiques selon l'une quelconque des revendications 12 à 15, dans lequel le laser à fibres optiques est configuré de façon à produire un fonctionnement à polarisation double.

18. Laser à fibres optiques selon l'une quelconque des revendications 12 à 15, dans lequel le laser à fibres optiques est configuré pour produire un fonctionnement à longueur d'onde double ayant une polarisation.

19. Laser à fibres optiques selon la revendication 18, dans lequel la structure de réseau de diffraction est une structure à déphasage de Moiré ayant une polarisation.

20. Laser à fibres optiques selon la revendication 18, dans lequel la structure de réseau de diffraction comprend des première et deuxième structures de réseau de diffraction à rétroaction répartie superposées.

21. Conjugateur de phase optique comprenant :
un ou plusieurs lasers à fibres optiques en ligne selon l'une quelconque des revendications 12 à 20 pour générer deux faisceaux de lumière de pompage polarisés de façon sensiblement orthogonale ; et
un guide d'onde de mélange non-linéaire pour recevoir et mélanger les faisceaux de pompage à un faisceau de signal d'entrée.

22. Conjugateur de phase selon la revendication 21, dans lequel le guide d'onde de mélange non-linéaire est sélectionné parmi le groupe comprenant :
une fibre optique à dispersion décalée ; une fibre optique aux chalcogénures ; et un amplificateur optique à semiconducteurs.

23. Conjugateur de phase selon la revendication 21 ou la revendication 22, dans lequel les deux faisceaux de pompage ont des longueurs d'onde décalées de chaque côté de la longueur d'onde du faisceau de signal.

24. Conjugateur de phase selon l'une quelconque des revendications 21 à 23, dans lequel les lasers à fibres optiques en ligne au nombre d'un ou davantage comprennent :
un premier laser à fibres optiques à polarisation unique (110) selon la revendication 16 ;
un dispositif de commande de polarisation (30) pour faire varier la polarisation d'un faisceau de lumière généré par le premier laser à fibres optiques à polarisation unique ; et
un deuxième laser à fibres optiques à polarisation unique (120) selon la revendication 16 connecté en série avec le premier laser à fibres optiques à polarisation unique et le dispositif de commande de polarisation.

25. Conjugateur de phase selon l'une quelconque des revendications 21 à 23, dans lequel les lasers à fibres optiques en ligne au nombre d'un ou davantage comprennent :
un laser à fibres optiques à polarisation double (100) selon la revendication 17.

26. Source de laser comprenant :
un laser à longueur d'onde double et à polarisation unique selon la revendication 18, ayant deux longueurs d'onde de sortie ;
des moyens (200) pour détecter et contrôler une fréquence de battement entre les deux longueurs d'onde de sortie du laser ; et
un circuit de rétroaction (210) pouvant fonctionner de façon à commander les deux longueurs d'onde de sortie du laser pour maintenir sensiblement constante la fréquence de battement détectée.
